Europäisches Patentamt

European Patent Office

Office européen des brevets

(11) Publication number: **0 092 853**
A2

(12) **EUROPEAN PATENT APPLICATION**

(21) Application number: **83104757.6**

(22) Date of filing: **12.11.80**

(51) Int. Cl.³: **E 04 D 3/36**
**E 04 D 13/16**

(30) Priority: **13.11.79 US 93173**

(43) Date of publication of application:
**02.11.83 Bulletin 83/44**

(84) Designated Contracting States:
**DE FR GB NL**

(80) Publication number of the earlier application
in accordance with Art. 76 EPC: **0 040 239**

(71) Applicant: **ENCON PRODUCTS, INC.**
**201 S.W. 89th, Suite E**
**Oklahoma City, OK 73139(US)**

(72) Inventor: **Simpson, Harold G.**
**8800 North Kensington Road**
**Oklahoma City Oklahoma 73132(US)**

(74) Representative: **Barlow, Roy James et al,**
**J.A.KEMP & CO. 14, South Square Gray's Inn**
**London WC1R 5EU(GB)**

(54) Method of forming a pre-fabricated building.

(57) A method of forming a pre-fabricated building structure in which a thermally insulating blanket (30) including a moisture impregnable vapour barrier is stretched taut over the structural assembly of rafters (20) and purlins (14) and then panels (16) are mounted over the purlins and secured in a predetermined spatial relationship thereto, using standoff support devices (40) comprising a support member (44) and a plurality of fastener means (42) for attaching the support member to a purlin.

FIG. 3

- 1 -

"METHOD OF FORMING A PRE-FABRICATED BUILDING"

The present invention relates to a method of erecting the roof of a pre-fabricated building using a panelling system to provide improved insulating qualities to the building.

The established method of erecting the roof or wall of a pre-engineered building is to erect the primary structural members; to attach the secondary structural members to the primary structural members; to secure the appropriate bracing members; to roll blanket-type insulation across the secondary structural members; to dispose panel members over the insulation and to connect the panel members and secondary structural members together by fasteners that penetrate the insulation. The final step is performed by a workman who stands on top of the panel member and inserts fasteners through the panel member to attach it to the underlying secondary structural member.

As the fasteners are installed through the panel members, the underlying insulation is compressed between the panel members and the secondary structural members. This is undesirable, as it reduces the thermal effectiveness of the insulation. Furthermore, the purpose of the fasteners is to secure the panel members and to transfer tensile, shear or compressive stress from the panel members, which is usually the exterior sheathing or roofing members, to the secondary structural members. A compressive stress is created by downwardly directed live loads which are transferred through the insulation, which is generally a compressible but non-elastic material. As the panel members move relative to the secondary structural members during the life of the building, looseness occurs around the fasteners, and it is difficult, if not impossible, to maintain a watertight connection at the points where the fasteners penetrate the panel members.

It has been proposed to dispose a more elastic insulation board between the insulation and the panel member, the insulation board being penetrated by the fasteners before the insulation. As the fasteners are attached the insulation board spreads the compressive load of the fasteners over a larger area of the insulation to reduce its reduction in the thickness. While this provides an improvement, the insulation is still compressed under the insulation boards. The insulation board is normally made of a soft material, and the compressive force caused by inserting the fasteners may tend to crush it, which can cause dimpling of the single skin panel members, ponding of water in these dimples around the fastener heads and resulting excessive corrosion at these points. Continued expansion and contraction of the roof can cause continued compression of the insulation board at the fastener points, and this can result in roof leaks between the heads of the fasteners and the panel members. This occurs because the pressure between the fastener heads and the panels is no longer maintained, and even the provision of washers will not guarantee a watertight seal.

The use of the insulation boards can create void spaces between the panels and the insulation at the edges of the insulation boards, which is detrimental from a heat transfer standpoint. The insulation boards are relatively expensive and are difficult to install, because wind, which is often encountered, frequently dislodges them before the overlying panels can be positioned, or the insulation boards are dislodged by the panels as the panels are being positioned.

It is an object of the present invention to overcome the problems of compression of the insulation blanket around the points of securing of the panels to the underlying structural assembly of the building.

Accordingly the present invention provides a method of forming a pre-fabricated building structure comprising forming a structural assembly of the pre-fabricated building, applying over at least a portion of said structural assembly an insulating blanket including a flexible layer and an insulation layer of compressible insulation material and applying panels over the insulation blanket, characterised by the steps of acting on said blanket to tautly stretch the blanket over the structural assembly, mounting a panel securing assembly on the structural assembly and applying and securing the panels to the panel securing assembly whereby the panel securing assembly transfers loads from the panels to the structural assembly while the insulation substantially uniformly retains its resistance to heat transfer.

Other features and advantages of the present invention will become apparent from the following detailed description, given by way of example, with reference to the accompanying drawings, in which:-

Figure 1 is a cross-section through a

- 4 -

pre-engineered building roof constructed using one embodiment of a standoff support device in accordance with the present invention;

Figures 2A and 2B are enlarged sections through portions of two prior art installations of a pre-fabricated building roof;

Figure 3 is a partial cutaway, perspective view of a standoff support device of the present invention showing the relative positions of roof panel members to a purlin of a pre-fabricated building;

Figure 4 is a top plan view of the apparatus of Figure 3 with the insulation removed to show the purlin; and

Figure 5 is an elevational view, partly in section, through an embodiment of fastener assembly of the standoff support device according to the present invention.

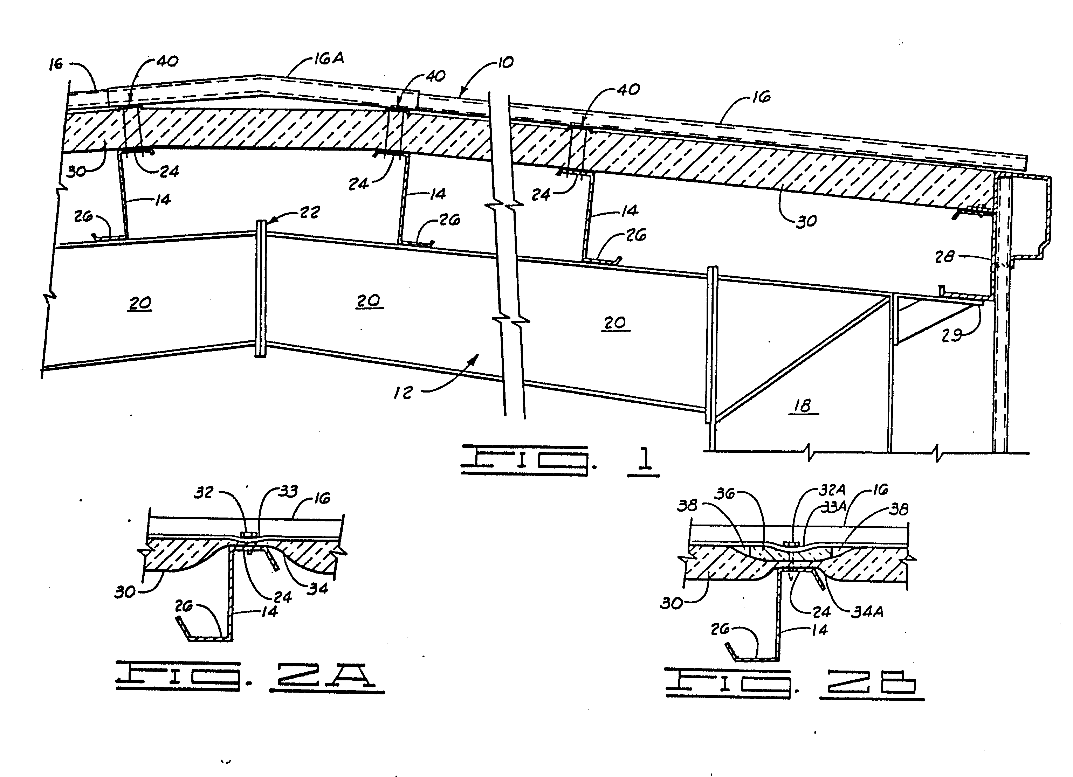

Figure 1 shows a portion 10 of the roof of a conventional pre-fabricated building modified by using the standoff support device of the present invention, the roof 10 including primary structural members 12, secondary structural members 14 and corrugated roof panels 16. The primary structural members 12 comprise vertical columns 18 and the generally horizontal rafters 20 supported by the columns 18 and interconnected by bolts (not shown) to form an apex 22. The secondary structural members 14 or purlins have a Z-cross-section formed by oppositely extending flanges 24 and 26. As described below, the roof panels 16 are fastened indirectly to the purlins 14 which extend substantially the length of the roof 10 and which are connected to the rafters 20 <u>via</u> conventional connectors (not shown). Eave struts 28 are supported along the edge of the building by outwardly extending supports 29 which are connected <u>via</u> conventional connectors (not shown) to the vertical columns 18. Other details of the pre-fabricated building depicted in Figure 1 are either not described or omitted from the drawings in order to simplify the present disclosure.

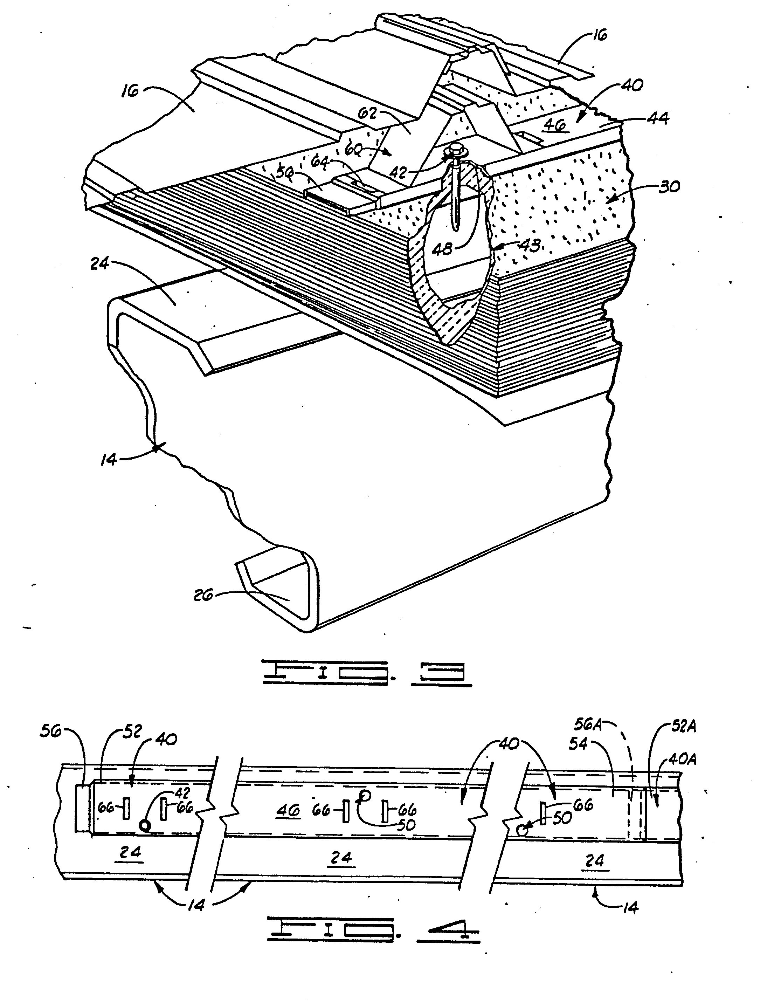

The established method for insulating a pre-fabricated building roof, such as the roof 10 in Figure 1, is to place rolls of insulated material 30 over the purlins 14 so that the insulation is supported by the flanges 24. The roof panels 16 are then positioned directly on top of the insulation 30 and bolted to the flanges 24 in the manner shown in Figure 2A in which a screw 32 extends from the top through the panel 16 and threadingly engages a predrilled hole in the flange 24 of the underlying purlin 14. As the screw 32 is tightened, the panel member is deformed, and a dimple 33 results around the head of the screw 32. This results in the constriction of the insulation 30, as shown at 34, reducing the thickness of the insulation and creating a "thermal short circuit" to the roof panel 16, so that excessive heat loss occurs. This is evident when the roof of a pre-fabricated building is covered by snow, the first points at which melting occurs coincide with the connecting joints where the screws 32 attach the roof to the purlins. This problem is then exacerbated by the melted snow that forms pockets of water in the dimples 33, resulting in excessive leaks, corrosion and other undesirable problems. All of this results from compressing the insulation 30, which is normally compressible mineral or chopped glass fibre insulation, such as Fiberglass (R.T.M.), and which can be reduced to less than 15 percent of its original thickness as it is constricted between the purlin 14 and the panel member 16.

One prior art solution to this heat loss is shown in Figure 2B, in which like numerals designate those elements which are identical to those depicted in Figure 2A. An insulation board 36 is disposed above the flange 24 between the insulation 30 and the roof panel 16 so that the screw 32A passes through the insulation board 36, through the insulation 30, and attaches to the flange 24. The insulation board 36 serves to spread the compressive force of the fastened roof panel 16 at the screws 32A over a greater area of the insulation 30, and although this is constricted at 34A in the same manner as shown in Figure 2A, the combined thickness of the insulation board 36 and the compressed insulation is greater.

While this provides an improvement, there are a number of shortcomings. The insulation 30 is still compressed and there are voids 38 between the insulation board 36, the roof panel 16 and the insulation 30, the result of which is even greater deterioration of the insulating quality at the connecting joints. In practice, the insulation board 36 is normally made of a relatively soft material, so that it is crushed by the screw 32A, resulting in increased dimpling of the panel 16, and ponding of water in the exaggerated dimples 33A brings about even greater corrosion. Continued movement of the roof because of expansion and contraction can cause continued crushing of the insulation boards at the connecting joints, leading to even worsened leaking conditions as the pressure between the heads of the screws 32A and the panels 16 is no longer maintained, and even elastomeric washers, if provided, do not ensure that watertight seals will be maintained during the life of the roof.

According to the present invention, the roof panels 16 (Figure 1) are supported by standoff support devices 40 which are secured to the flanges 24 of the purlins 14. Thus, the roof panels 16 are not attached directly to the underlying purlins as in both Figure 2A and Figure 2B. Rather, the roof panels 16 are attached to the standoff support devices 40 which are attached to the purlins 14 via fasteners that extend through the insulation material 30.

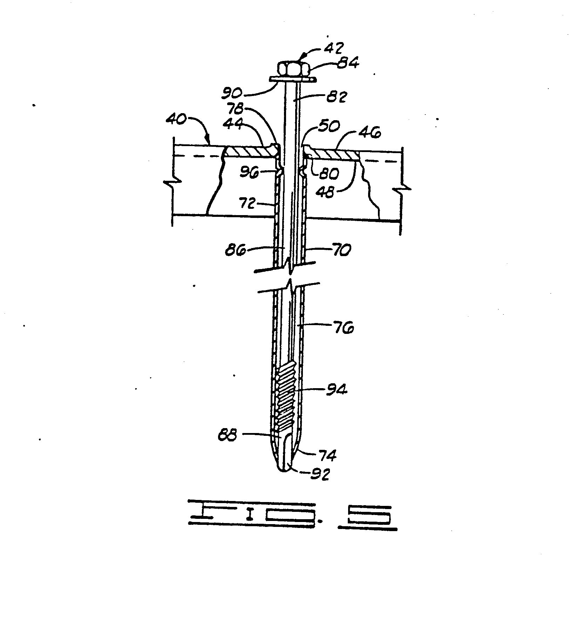

As shown in Figure 3 insulation material 30 is supported on the upper flange 24 of purlin 14 and the standoff support device 40 is fastened to the flange 24 of the purlin 14 by a plurality of fastener assemblies 42. The insulation 30 and the standoff support device 40 is shown partially removed at 43 so as to show the fastener assembly 42 more fully.

The standoff support device 40 comprises a channel shaped spacer member 44 having an upper first support surface 46 and a lower second support surface 48. The support member 44 has a plurality of fastener apertures 50 as best shown in Figure 4. The fastener assemblies 42 extend through the fastener apertures 50 to attach to the underlying substrate or purlin 14 in the manner described more fully hereinbelow. While the locations of the fastener apertures 50 may assume a variety of layout patterns, the offset pattern shown in Figure 4 is believed to be beneficial in providing greater stability to an imposed load.

The standoff support device 40 shown in broken view in Figure 4 has a first end 52 and a second end 54, a portion of the first end 52 being shaped in the form of a protruding tag 56. A second identical standoff support device 40A is disposed in end-to-end alignment with the support device 40, and its tag 56A is received in the channel web of end 54 of device 40. In like manner, a plurality of standoff support devices interjoin to provide a continuously extending upper or first surface 46 along the length of the supporting purlin 40, thus providing stability of the standoff support devices 40 supported by a single purlin 14, and further providing a guide piece to a workman as he interlocks each standoff support device 40 to those already attached to the underlying purlin during installation.

A channel support bridge 60 (Figure 3), provided at the overlapping edges of adjacent roof panels 16, has a bridge portion 62 which is supported at its opposite ends on the first support surface 46 by attachment of clips 64, disposed in appropriately disposed slots 66 (as shown in Figure 4). The bridge portion 62 is configured to have a profile which will mate with the overlapping edges of the roof panels 16 which are attached to the panel support bridge via conventional bolts (not shown) after a sealant is disposed therebetween.

The fastener assembly 42 depicted in Figure 5 comprises a column 70 having a first end 72 and a second end 74, the column 70 also having a channelway 76 extending between the ends 72 and 74. Each of the fastener apertures 50 is upset such that the internal surface 78 of the aperture 50 is flared away from the surface 46 in the manner shown. This provides a recess 80 to receive the first end 72 of the column 70, and the first end 72 is wedged or welded in the recess 80. The illustrated column 70 is a tube column which is connected to the support member 44 at its first end 72, and which is tapered at its second end 74. The channelway 76 is substantially axially aligned and communicates with the respective aperture 50 with which it is associated.

The fastener assembly 42 also comprises an elongated fastener member 82 which has a first end 84, a body portion 86 and a second end 88. The first end 84 has a bolt head configuration for engagement by an appropriately sized wrench for rotating the fastener member 82, and is optionally provided with a washer 90. The second end 88 serves as a self-drilling/self-tapping screw and comprises a drill bit end 92, the body portion 86 having a threaded portion 94 adjacent the drill bit end 92.

As depicted in Figure 5, the fastener member 82 is disposed with its body portion extending through the fastener aperture 50 and the channelway 76. The tapered second end of the column 70 partially closes the channelway 76 sufficiently to receive the drill bit end 92 in a friction fit therewith, permitting the second end 88 to protrude from the end of the channelway 76. This arrangement provides for the retention of the fastener member 82 in an assembled position with the column 70, ready for penetration of the insulation material 36 and for securement to the purlin 14. The column 70 is shown as having an inwardly crimped portion 96 to assist in retaining the fastener member 82, the crimping being effected once the body portion 86 is positioned in the column at some convenient position clear of the threaded portion 94.

The dimensional proportions of the fastener assembly are chosen such that the distance between the top surface of the flange 24 and the second support surface 48 of the support member 44, once the fastener member 82 is adequately tightened to the flange 24, is approximately equal to, or somewhat greater than, the thickness of the insulation blanket 30 so that the latter is not compressed. Of course, it will be recognized that the dimensional proportions of the fastener assemblies 40,100 may be altered as desired to accommodate the insulation being installed.

- 10 -

The installation of the roof 10 utilizing the present invention will be described with reference to the standoff support device 40 which has been described with reference to Figures 3 to 5.

After the purlins 14 have been positioned and attached to the rafter members 20, the insulation blanket is rolled over the purlins so that one or more widths of the blanket extend continuously from one side of the building to the other, with each of the widths of insulation passing over the apex of the building. Once in place, each of the widths of insulation blanket is cut to required length and weighted at each of its ends so as to tautly stretch each width of insulation over the rows of purlins.

Each standoff support device 40 will be pre-assembled prior to use, so that a fastener assembly 42 is associated with each aperture 50 in the assembled position as depicted in Figure 5. The first standoff support device 40 to be placed at the edge of the purlin 14 will be generally aligned with the longitudinal axis of the purlin to which it is to be attached and positioned with the drill bit ends 92 of all of its fastener assemblies 42 resting upon the top layer of the insulation 30, this being in most cases, a moisture impregnable vapour barrier which is normally a vinyl film reinforced with some type of fibre. By pressing the standoff support device 40 toward the underlying purlin 14, the drill bit ends 92 will easily penetrate the insulation and its vapour barrier, causing minimal disturbance to either the insulation or its vapour barrier. As the fastener assemblies 42 are pushed through the insulation 30, the drill bit ends 92 will come to rest on the flange 24 of the purlin 14.

The alignment of the longitudinal axis of the initially placed standoff support device 40 can be achieved visually, or the proper alignment can be determined by the use of an aligning tool (not shown). This aligning tool is placed so as to abut with the end of a purlin, and it should provide an aligning tang protrusion, similar to the tang 56 shown in Figure 4, which will be receivable within the channel portion of the second end 54 of the standoff support device initially being positioned on the underlying purlin 14. Of course, instead of an aligning tool being used an aligning tang protrusion can alternatively be provided by attaching or forming a guide member at one or both ends of each purlin 14, with the guide member having a protruding tang or the like, which serves to guide the placement of the initially positioned standoff support device.

Whichever alignment of the first placed standoff support device is utilised, it is anticipated that the longitudinal alignment of the initial standoff support device 40 will be achieved somewhat simultaneously with pushing the fastener assemblies 42 through the insulation 30. Once the drill bit ends 92 are resting on the flange 24 of the underlying purlin 14, the longitudinal alignment having been determined, the installer can effect attachment to the flange 24 by applying rotational energy to the headed first end 84 of each fastener members 82 _via_ an appropriate tool.

The second standoff support device 40 can be easily positioned by placing the channel of its second end 54 over the protruding tang 56 of the first end 52 of the already positioned device 40. Once this interlocking step is accomplished, the fastener assemblies 42 of the second standoff support device 40 are pushed through the insulation 30 and secured to the purlin in the manner described for the first placed standoff support device 40. These steps are repeated until a row of aligned standoff support devices 40 extend the combined distance of the widths of the insulation 30. In like manner, a row of standoff support devices 40 is provided for each of the purlins.

Thereafter, it is a simple matter to position the roof panels 16 onto the first support surfaces 46 of the standoff support device 40, and to attach the roof panels 16 to the standoff support devices 40 with conventional screws. In fact, it has been found that the installation of the panels 16 is made much easier with the use of the standoff support devices 40 constructed in accordance with the present invention. For one thing, the rows of axially aligned and fixed standoff support devices 40 serve as a solid insulation bridge and provide a solid footing for the panels. Further, they provide the installer with a visual guide to aid in the placement of screw members through the panel members 16, providing confidence that each screw member used to fasten the roof panel 16 will be anchored to underlying solid structural members, which, in this case, will be the underlying standoff support devices 40.

As the fastener assemblies 42 are caused to penetrate the insulation 30, the pre-penetration integrity of the insulation is substantially maintained since the fastener assemblies 42 cause minimal disturbance to the insulation material. Rotational energy applied to the headed ends 84 of the fastener members 82 serve to vibrate the loose insulation fibres, causing the insulation to "fill out", and since the elongated fastener assemblies 42 are relatively small in relation to the supported areas of the standoff support devices 40, the insulation is substantially unchanged from its pre-penetration.

Other forms of fastener assembly, such as are disclosed in Figures 6, 7, 8 and 9 of our WIPO Patent Application Publication No. 81/01436 (Application PCT/US/80/01508), may be used to secure the support member 44 to the substrate 24.

- 14 -

C L A I M S

1. A method of forming a pre-fabricated building structure comprising forming a structural assembly of the pre-fabricated building, applying over at least a portion of said structural assembly an insulating blanket including a flexible layer and an insulation layer of compressible insulation material and applying panels over the insulation blanket, characterised by the steps of acting on said blanket to tautly stretch the blanket over the structural assembly, mounting a panel securing assembly on the structural assembly, and applying and securing the panels to the panel securing assembly whereby the panel securing assembly transfers loads from the panels to the structural assembly while the insulation substantially uniformly retains its resistance to heat transfer.

2. A method according to claim 1, characterised in that the building has a roof apex, and in that the insulation blanket is applied thereto in separate widths passing over the apex and the substrate by the application of energy to the first end (72,72A,72B,134,164) of the column.

3. A method according to claim 2, characterised in that the tension is applied to the insulation blanket by weighting the widths of blanket at each of their ends.

4. A method according to any one of claims 1 to 3, characterised in that the panel securing assembly comprises a series of support members (44) having pre-attached fastening members (47) which engage the underlying structural assembly of the building at any appropriate location thereof to hold the support member spaced from but fixed in relation to the structural assembly.

- 15 -

5. A method according to any one of the
preceding claims, characterised in that the insulating
blanket includes a moisture impregnable vapour barrier
material reinforced with fibres.

FIG. 1

FIG. 2A

FIG. 2B

FIG. 3

FIG. 4

0092853

FIG. 5